# EUROPEAN PATENT APPLICATION

(11) **EP 0 536 624 A1**
(43) Date of publication of application: **14.04.1993**
(21) Application number: 92116630.2
(22) Date of filing: 29.09.1992
(51) Int. Cl.: B60R 21/00, B60R 21/22, B60R 21/32

(54) **Arrangement of collision sensor for side collision airbag apparatus**

(30) Priority: 30.09.1991 JP 278264/91; 04.06.1992 JP 170124/92
(71) Applicant: TOYOTA JIDOSHA KABUSHIKI KAISHA, Aichi-ken (JP)
(72) Inventor: Morishita, Kentaro, Toyota-shi, Aichi-ken (JP); Ohashi, Hiroshi, Toyota-shi, Aichi-ken (JP)
(74) Representative: Tiedtke, Harro, Dipl.-Ing.

(57) **Abstract**

An acceleration sensor (24) acting as a collision sensor for sensing a collision in terms of an impact load inputted from a side of a vehicular body is mounted either directly on a cross member (16), which is arranged widthwise of the vehicular body (11), or on a floor pan close (12) to the cross member so that a load due to a side collision is inputted without any attenuation to the collision sensor (24) through the cross member. As a result, the side collision can be reliably sensed at an early stage. Moreover, the number of collision sensors can be reduced because the single collision sensor can sense a collision at either lefthand or righthand side. If the collision sensor is disposed on a floor tunnel (13) either in or close to a position intersecting the axis of the cross member (16) arranged widthwise of the vehicular body (11), the load at the time of a side collision is transmitted without any attenuation to the collision sensor, because the floor tunnel (13) is rigidly connected to the cross member (16), so that the side collision can be reliably sensed at an early stage.

## Description

### BACKGROUND OF THE INVENTION

The present invention relates to a side collision airbag apparatus for a vehicle and, more particularly, to an arrangement of a collision sensor for ensuring a timed inflation of the airbag of the side collision airbag apparatus to protect a vehicular passenger against a secondary collision.

Some airbag apparatus of the prior art employs an acceleration sensor as its collision sensor. This collision sensor senses a collision of the vehicle, if any, when it receives an impact load at a predetermined or more level from front of the vehicle, to output a signal for igniting a gas generant in an inflater.

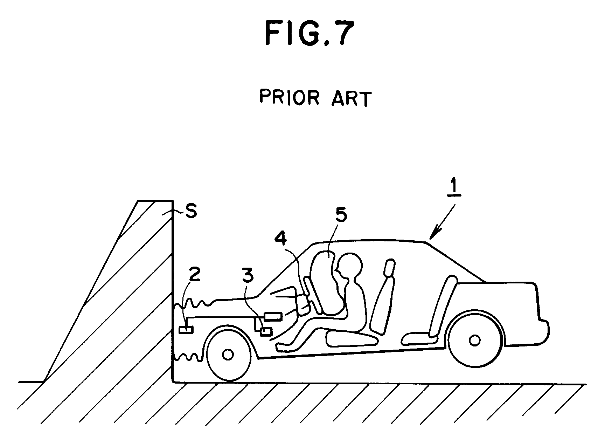

An airbag apparatus of this kind is disclosed in Japanese Patent Laid-Open No. 10159/1990, for example. This airbag apparatus is equipped, as shown in Fig. 7, with a plurality of less sensitive front collision sensors 2 in front of the front frame of a vehicle 1 and a more sensitive rear collision sensor 3 at the back of the front frame. If the vehicle 1 encounters a front collision against an obstacle S, this front collision is sensed in terms of a negative acceleration (i.e., deceleration) received from the front by the front collision sensors 2. At this instant, an airbag 5 is inflated from the central portion of a steering wheel 4 to protect a passenger such as a driver D from a secondary collision against the steering wheel 4.

In short, in the airbag apparatus of the prior art described above, the front collision of the vehicle 1 can be reliably sensed to inflate the airbag 5 by arranging a plurality of acceleration sensors as the front collision sensors 2 and the rear collision sensor 3 in front of and at the back of the front frame of the vehicle 1. However, the collision sensors 2 and 3 may frequently fail to sense a side collision of the vehicle 1. In order to sense the side collision over a wide range without fail, therefore, an additional number of collision sensors have to be arranged in the individual portions of the vehicular body. As a result, the wiring circuit of the collision sensing system is complicated while spaces being retained for mounting the additional collision sensors. Thus, the collision sensing system cannot avoid an increase in the production cost.

### SUMMARY OF THE INVENTION

A main object of the present invention is to provide a collision sensor arrangement capable of sensing a side collision of a vehicular body reliably with a small number of collision sensors.

According to the present invention, therefore, there is provided an arrangement of a collision sensor, in which the collision sensor for sensing a collision in terms of an impact load inputted from the side of the vehicular body is mounted either directly on a cross member arranged widthwise of the vehicular body or on a floor pan close to the cross member.

Alternatively, the collision sensor can be disposed on a floor tunnel formed longitudinally at the center of the vehicular body and across or close to the axis of cross member arranged widthwise of the vehicular body.

The above and further objects and novel features of the present invention will more fully appear from the following detailed description when the same is read in connection with the accompanying drawings. It is to be expressly understood, however, that the drawings are for the purpose of illustrations only and are not intended as a definition of the limits of the invention.

### BRIEF DESCRIPTION OF THE DRAWINGS

Fig. 1 is a top plan view of a monocoque body and shows a first embodiment of an arrangement of a collision sensor for a side collision airbag apparatus according to the present invention;
Fig. 2 is an enlarged section taken along line II - II of Fig. 1;
Fig. 3 is an enlarged section taken along line III - III of Fig. 1;
Fig. 4 is an enlarged top plan view showing an essential portion of a second embodiment of the present invention;
Fig.5 is a section taken along line V - V of Fig. 4;
Fig. 6 is similar to Fig. 1 but shows a third embodiment of the present invention; and
Fig. 7 is an explanatory diagram showing one example of the collision sensor arrangement of the prior art.

### DETAILED DESCRIPTION OF THE PREFERRED EMBODIMENTS

An arrangement of a collision sensor for a side collision airbag according to the present invention will be specifically described with reference to the accompanying drawings.

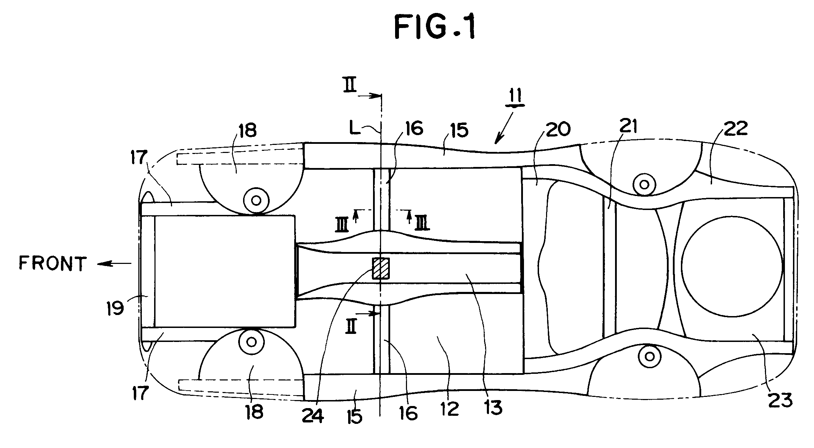

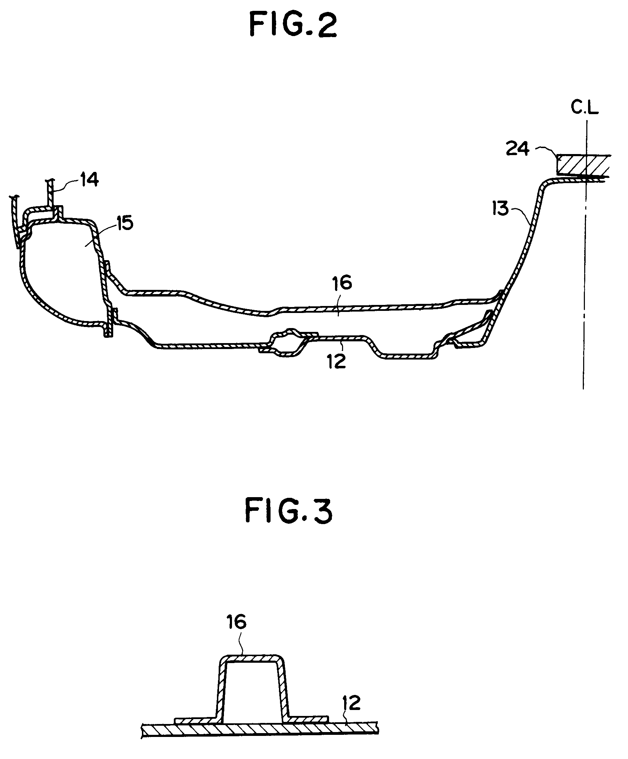

Figs. 1 to 3 show a first embodiment of the present invention, in which the collision sensor arrangement of the invention is applied to an FR (i.e., Front-engine Rear-drive) car having a monocoque body. Fig. 1 presents a top plan view schematically showing a state, in which a monocoque body 1 is cut at a level slightly higher than a floor plane. At the center of a front floor panel 12 covering the bottom of the body 11, there is arranged a floor tunnel 13 which is extended on the widthwise center line CL (as seen from Fig. 2) of the body 11. The floor tunnel 13 is shaped into a high trapezoidal section having its bottom side opened to accommodate a (not-shown) propeller shaft. At the two sides of the front floor pan 12, moreover, there are arranged generally in parallel with the floor tunnel 13 a pair of front floor side members or side sills 15 and 15 for providing abutments against the lower end portions of side doors 14 when these doors 14 are closed. The two side sills 15 and 15 and the two sides of the floor tunnel 13 are individually connected by means of front floor cross members 16 and 16 which are disposed at right angles with respect to the vehicular center line CL. Moreover, each of the front floor cross members 16 is shaped into a hat-shaped section which has its open sides welded to the upper faces of the front floor pan 12, as shown in Fig. 3.

At the front side (as viewed at the lefthand side in Fig.1) of the front floor pan 12, on the other hand, there are symmetrically across the vehicular center line CL disposed two front side members 17 and 17 which are respectively extended forward from the inner sides of front tire houses 18 and 18. Moreover, the two front side members 17 and 17 have their leading ends connected by a front cross member 19. At the back of the front floor pan 12, on the other hand, there are disposed rear floor side members 22 and 22 which have a first rear floor cross member 20, a second rear floor cross member 21 and so on connected thereto in the shape of a latter. The rear floor side members 22 and 22 are extended backward from the two side sills 15 and 15 and have their lower face covered with a rear floor pan 23.

Moreover, a single acceleration sensor 24 is disposed as the collision sensor by means of bolts on the floor tunnel 13 extending on the center line CL and over the axis L of the front floor cross members 16 and 16 connecting the two sides of the floor tunnel 13 and the two side sills 15 and 15. The acceleration sensor 24 can input a load of a predetermined or more level from the righthand or lefthand side of the body 11 to sense a collision at both sides of the body 11 by itself.

Next, the operations of the embodiment thus constructed will be described in the following.

The acceleration sensor 24 acting as the collision sensor is disposed on the floor tunnel 13 and the axis L of the front floor cross members 16. In case of a side collision, an impact load caused by the collision is transmitted through the front floor cross members 16 and the floor tunnel 13 to the acceleration sensor 24. Since the front cross members 16 and the front tunnel 13 are made sufficiently rigid, the impact load caused by the side collision is not absorbed midway but transmitted to the acceleration sensor 24. On the other hand, if the acceleration sensor 24 should be disposed on a portion of low rigidity such as the central portion of the floor pan, this less rigid member would be deformed to allow the impact load transmitted to be sensed as a lighter load by the acceleration sensor 24.

If the impact load is sensed, which side of the body 11 the collision has occurred at is decided from the input direction of the impact load, and a signal is outputted to ignite the inflater of the airbag apparatus which is disposed at the collision side. Then, the airbag at the corresponding side is inflated with the nitrogen gas generated by the ignited inflater to expand in the space between the inner side wall of the vehicular compartment such as the side door and the passenger. As a result, the passenger can be protected from a secondary collision against the inner side wall by the inflated airbag. The structures and arrangements of those inflater and airbag are disclosed in U.S.P. No. 4,966,388, for example.

In the arrangement of the collision sensor according to this embodiment, therefore, the acceleration sensor 24 is disposed on the floor tunnel 13 on the center line CL of the monocoque body 11 and over the axis L of the front floor cross members 16 and 16 connecting the side sills 15 and 15 and the floor tunnel 13. As a result, a side collision inputted from the righthand or lefthand side can be sensed in high sensitivity even by the single collision sensor.

Since, moreover, the acceleration sensor 24 for the side collision is arranged generally at the center of the body 11 on the floor tunnel 13, it can be arranged in a box together with an electronic control unit (i.e., ECU) for a collision sensor of a front collision airbag apparatus. This integral accommodation makes it possible to lighten the total apparatus, as compared with the case in which the box housing the side collision sensor is separately provided, and to prevent the wire harness of the apparatus from being complicated.

Incidentally, the present embodiment has been described in case the acceleration sensor 24 as the collision sensor is mounted on the front floor cross members 16. The acceleration sensor 24 may be mounted either on another cross member including the first rear floor cross member 20, the second rear floor cross member 21 and the front cross member 19 or the floor pan close to the cross members. In this modification, too, similar effects can be achieved.

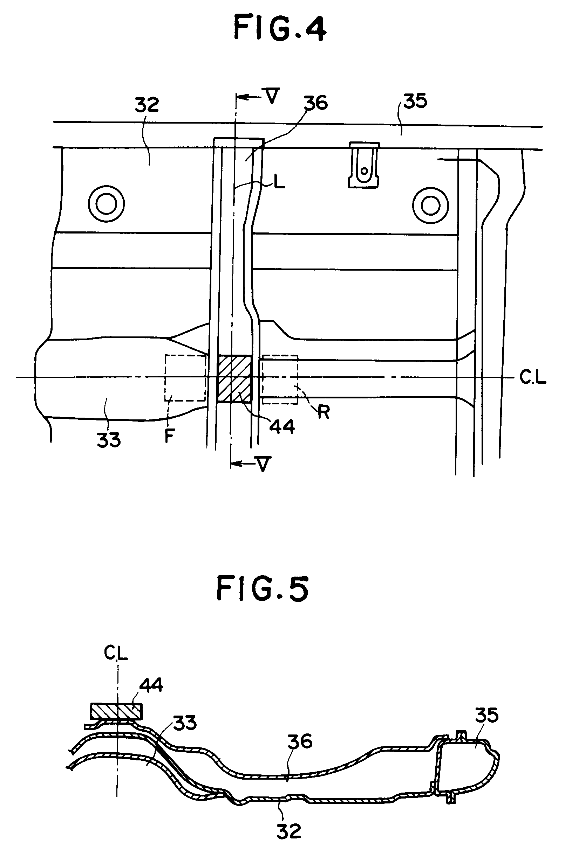

On the other hand, Figs. 4 and 5 show a second embodiment, in which the arrangement of the collision sensor of the present invention is applied to an FF (i.e., Front-engine Front-drive) car having a monocoque body. Fig. 4 is a top plan view showing the vicinity of a front floor across member of the monocoque body. At the center of a front floor pan 32 (although one half is omitted) covering the lower face of the body, as shown in Fig. 4, there is disposed a floor tunnel 33 which is extended in the longitudinal direction of the vehicular body. The front tunnel 33 is formed into a shallow channel shape having its bottom side opened to afford a longitudinal rigidity. At the two side edges of the front floor pan 32, moreover, there are arranged generally in parallel with the floor tunnel 33 a pair of side sills 35 (although one is omitted). Between these side sills 35, there is disposed at a right angle with respect to the vehicular center line CL a front floor cross member 36 which connects the side sills 35 across the central floor tunnel 33.

Moreover, a single acceleration sensor 44 is fixed as the collision sensor by means of bolts on the front floor cross member 36 generally at the center of the body, i.e., above the floor tunnel 33 extended on the vehicular center line CL. The acceleration sensor 44 senses the input of a load at a predetermined or more level from the righthand or lefthand side of the body so that it can sense both the two sides of the body by itself. Thus, there can be attained effects similar to those of the foregoing first embodiment.

Thus, in the present embodiment, the box housing the acceleration sensor 44 is arranged in or close to the position where the front floor cross member 36 crosses over the floor tunnel 33. As a result, the appearance may be deteriorated by the bulge which is formed on the carpet covering the floor tunnel 33. In this case, too, similar effects can be achieved even if the acceleration sensor 44 is arranged either in a lower position F on the floor pan slightly in front of the axis L of the front floor cross members 36 or in a lower position R on the floor pan slightly at the back of the axis L.

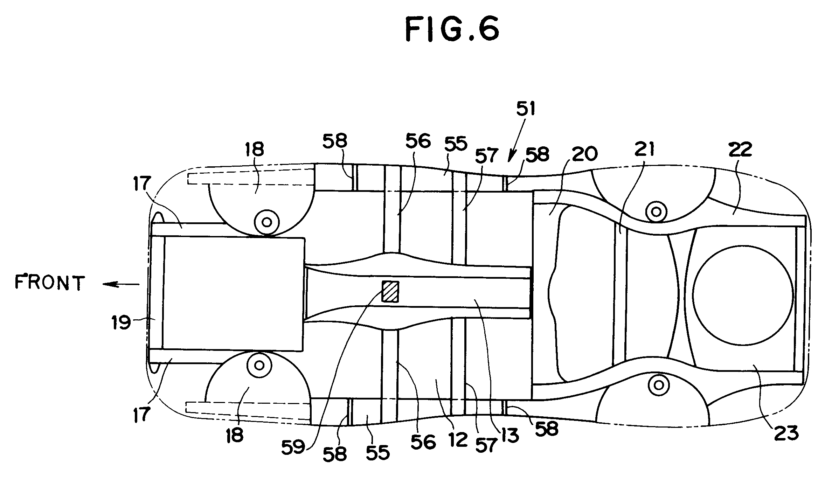

On the other hand, Fig. 6 shows a third embodiment of the present invention. In the description to be made in the following, the same structural parts as those of the foregoing first embodiment are designated at the identical reference numerals in Fig. 6 so that their detailed description may be omitted.

Fig. 6 is a top plan view schematically showing the state, in which a monocoque body 51 of the FR car is cut at a level slightly higher than the floor face. At the center of the front floor pan 12, there is arranged on the vehicular center line the floor tunnel 13 which is formed into a trapezoidal section having its lower side opened. At the two sides of the front floor pan 12, there are arranged generally in parallel with the floor tunnel 13 a pair of side sills 55 and 55 which provide abutments against the lower end portions of side doors 14 and act as the front floor side members. Moreover, the two side sills 55 and 55 and the two sides of the floor tunnel 13 are connected to each other by first front floor cross members 56 and 56 and second front floor cross members 57 and 57, which are arranged at right angles with respect to the vehicular center line. Still moreover, those individual first and second front floor cross members 56 and 57 have their open lower faces welded to the upper face of the front floor pan 12.

In front (as located at the lefthand side in Fig. 6) of the front floor pan 12, on the other hand, there are disposed across the vehicular center line the two front side members 17 and 17 which are respectively extended forward from the inner sides of front tire houses 18 and 18. Moreover, the two front side members 17 and 17 have their leading ends connected by the front cross member 19. The first and second front floor cross members 56 and 57 have their individual end portions extended into the side sills 55 at the individual sides until they are welded to the inner faces of the side sills 55, as located at the outer sides of the vehicle. Moreover, the individual side sills 55 are reinforced against the load coming from the side of the body by fitting bulk heads 58 therein. Thanks to these bulk heads 58, a load, if applied to one side sill 55, is not attenuated but is instantly transmitted to the floor tunnel 13 through the floor cross members 56 and 57.

At the back of the front floor pan 12, on the other hand, there are disposed rear floor side members 22 and 22 which have a first rear floor cross member 20, a second rear floor cross member 21 and so on connected thereto in the shape of a latter. The rear floor side members 22 and 22 are extended backward from the two side sills 55 and 55 and have their lower face covered with a rear floor pan 23.

Moreover, a single bi-directional acceleration sensor 59 is disposed as the collision sensor by means of bolts on the floor tunnel 13 extending on the center line and over the axis of the front floor cross members 56 and 56 connecting the two sides of the floor tunnel 13 and the two side sills 55 and 55. The bi-directional acceleration sensor 59 can sense not only a front collision in response to an input of a load of a predetermined or more level from the front of the body 51 but also a side collision from the righthand or lefthand side of the body 51 in response to an input of a load of a predetermined or more level.

Next, the operations of the embodiment thus constructed will be described in the following.

The bi-directional acceleration sensor 59 is disposed on the floor tunnel 13 and on the axis of the first front floor cross members 56 which are rigidly connected to the sides of the floor tunnel 13. As a result, in case of a side collision, the front floor pan 12 having a low rigidity is deformed to absorb the impact load. In this apparatus, however, the impact load caused by the collision is transmitted through the floor tunnel 13 from the first and second front floor cross members 56 and 57 which themselves have high rigidities and are connected to the rigid members. As a result, the collision load applied to the side will not experience any attenuation.

In case of a front collision, on the other hand, the impact load is transmitted to the bi-directional acceleration sensor 59 on the floor tunnel 13 through the front cross member 19, the two front side members 17 and 17, or the not-shown engine cylinder block.

In this arrangement of the collision sensor, the bi-directional acceleration sensor 59 is mounted on the floor tunnel 13 in the position intersecting the axis of the first front floor cross members 56 so that it can sense not only the side collision from the righthand or lefthand side but also the front collision.

At the time of the side collision, which side of the body 11 the collision has occurred at is decided from the input direction of the impact load, and a signal is outputted to ignite the inflater of the airbag apparatus which is disposed at the collision side. Then, the airbag at the corresponding side is inflated with the nitrogen gas generated by the ignited inflater to expand in the space between the inner side wall of the vehicular compartment such as the side door and the passenger. As a result, the passenger can be protected from a secondary collision against the inner side wall by the inflated airbag.

At the time of the front collision, on the other hand, the input of the impact load from the front is sensed to inflate both a driver's airbag mounted in the central portion of the steering handle and a navigator's airbag mounted in the instrument panel, thereby to protect the driver and the navigator from any secondary collision.

Since, moreover, the side collision sensing sensor and the front collision sensing sensor, which might otherwise be separately disposed, can be replaced by the single bi-directional acceleration sensor 59, it is possible to reduce the mounting space therefor, to lighten the apparatus and to prevent the wire harness from being complicated. In any of the foregoing individual embodiments, the acceleration sensor 24, 44 or 59 is mounted on the floor tunnel of the monocoque body and on the position intersecting the axis of the cross members 16, 36 or 56. Despite of this fact, however, similar operations and effects could be achieved if the acceleration sensor were mounted on a highly rigid member such as an H-shaped frame, a perimeter type frame or a backbone type frame.

An acceleration sensor acting as a collision sensor for sensing a collision in terms of an impact load inputted from a side of a vehicular body is mounted either directly on a cross member, which is arranged widthwise of the vehicular body, or on a floor pan close to the cross member so that a load due to a side collision is inputted without any attenuation to the collision sensor through the cross member. As a result, the side collision can be reliably sensed at an early stage. Moreover, the number of collision sensors can be reduced because the single collision sensor can sense a collision at either lefthand or righthand side. If the collision sensor is disposed on a floor tunnel either in or close to a position intersecting the axis of the cross member arranged widthwise of the vehicular body, the load at the time of a side collision is transmitted without any attenuation to the collision sensor, because the floor tunnel is rigidly connected to the cross member, so that the side collision can be reliably sensed at an early stage.

## Claims

1. An arrangement of a collision sensor for a side collision airbag apparatus for inflating an airbag between a passenger and an inner side wall of the compartment of a vehicle at the time of a collision of the vehicle, comprising:
a floor structure including a reinforcing member for maintaining the strength and rigidity of a vehicular body; and
a collision sensor fixed on said reinforcing member for sensing a collision in terms of an impact load inputted from a side of the vehicular body.

2. A collision sensor arrangement according to Claim 1, wherein said reinforcing member includes: a cross member arranged widthwise of the vehicular body; and such a portion of a floor pan connected to said cross member as is close to said cross member, and wherein said collision sensor is fixed on said cross member.

3. A collision sensor arrangement according to Claim 1, wherein said reinforcing member includes: a cross member arranged widthwise of the vehicular body; and such a portion of a floor pan connected to said cross member as is close to said cross member, and wherein said collision sensor is fixed on the portion of said floor pan close to said cross member.

4. A collision sensor arrangement according to Claim 2, wherein said collision sensor is disposed on the center line of the vehicular body.

5. A collision sensor arrangement according to Claim 1, wherein said reinforcing member includes: a cross member arranged widthwise of the vehicular body; and a floor tunnel intersecting said cross member and extending in the longitudinal direction of the vehicular body, and wherein said collision sensor is disposed on said floor tunnel and across the axis of said cross member.

6. A collision sensor arrangement according to Claim 1, wherein said reinforcing member includes: a cross member arranged widthwise of the vehicular body; a floor tunnel intersecting said cross member and extending in the longitudinal direction of the vehicular body; and such a portion of a floor pan connected to an intersecting position between said cross member and said floor tunnel as is close to said intersecting position, and wherein said collision sensor is fixed on said floor pan close to said intersecting position.

7. A collision sensor arrangement according to Claim 1, wherein said collision sensor includes acceleration sensing means.

8. A collision sensor arrangement according to Claim 7, wherein said acceleration sensing means includes: a sensor for sensing an acceleration coming from the lefthand side of the vehicular body; and a sensor for sensing an acceleration coming from the righthand side.

9. A collision sensor arrangement according to Claim 7, wherein said acceleration sensing means includes a sensor for sensing accelerations coming from both the lefthand and righthand sides of the vehicular body.

10. A collision sensor arrangement according to Claim 1, further comprising another collision sensor for a front collision airbag apparatus, and wherein said collision sensor and said another collision sensor are integrated with each other.

11. A collision sensor arrangement according to Claim 10, wherein both said collision sensor and said another collision sensor are acceleration sensors.
